# EUROPEAN PATENT SPECIFICATION

(11) **EP 2 129 474 B1**
(45) Date of publication and mention of the grant of the patent: **29.06.2011**
(21) Application number: 07712380.0
(22) Date of filing: 28.02.2007
(51) Int. Cl.: B05D 7/00, C08K 3/04, C08K 9/02, C09D 121/00, D01H 5/80

(54) **ROLL COVER MATERIAL, USE THEREOF FOR PREPARING A COVER LAYER, AND METHOD OF MANUFACTURING AN ELASTIC ROLL COVER**
WALZENMANTEL-MATERIAL, SEINE VERWENDUNG ZUR HERSTELLUNG EINER MANTELSCHICHT UND VERFAHREN ZUR HERSTELLUNG EINES ELASTISCHEN WALZENMANTELS
MATÉRIAU DE REVÊTEMENT DE CYLINDRE, UTILISATION DE CE DERNIER POUR LA PRÉPARATION D'UNE COUCHE DE REVÊTEMENT ET PROCÉDÉ DE FABRICATION D'UN REVÊTEMENT DE CYLINDRE ÉLASTIQUE

(43) Date of publication of application: 09.12.2009
(73) Proprietor: Metso Paper, Inc., 00130 Helsinki (FI)
(72) Inventor: RUOTSI, Juha, FI-00130 Helsinki (FI); PAASONEN, Jan, FI-00130 Helsinki (FI); PISILÄ, Tero, FI-00130 Helsinki (FI); SIRKKO, Jari, FI-00130 Helsinki (FI)
(74) Representative: TBK
(86) International application number: PCT/EP2007/051892
(87) International publication number: WO 2008/104224

(56) References cited:
- EP-A- 1 777 258
- WO-A-2004/103582
- WO-A-2005/124019
- DE-A1- 4 220 446

## Description

The present invention relates to a paper making or processing equipment, and more particularly to a roll cover for the use in the preparation of a cover layer of a roll suitable for the paper production or the processing of paper. Furthermore, the present invention relates to a method of manufacturing an elastic roll cover. The term "paper" in this application is meant to cover web like fiber products such as paper board and tissue webs.

Some of the equipments for paper making processes or for processing paper are made of a polymer material. Examples of these are roll covers, blades for doctor coating or creping, belts, and fabrics. Rolls are constituted of a roll body usually made of a metal and a roll cover made of a polymer material having been specifically adjusted in its characteristic. Typical paper machine roll cover materials used in press rolls or size press rolls are made of rubber (co)polymers containing specifically adjusted contents of (meth)acrylate polymers. The commonly used rubber polymers used for this purpose are based on NBR, HNBR, CSM or EPDM rubbers. These rubbers are normally cured by a peroxide curing system. (Meth)acrylates are typically incorporated to these rubber materials during the mixing process as monomers and, usually, they are present in a liquid form in said step. They are used in order to specifically adjust or improve the hardness properties of the rubber material.

In the curing process, peroxide radicalizes rubber polymers (like NBR) to form crosslinks with each other. Also (meth)acrylate monomers are radicalized and they start to polymerize with each other and also form bonds with rubber polymers. This curing process leads to a higher toughness, strength, abrasion resistance and hardness of the cured rubber cover material.

WO 2005/ 090429 describes urethane-based coatings for process belts and roll covers suitable for the use in paper making processes. Especially, the mechanical and physical properties of the urethane materials for process belts and roll covers have been improved by incorporating nanoparticles in the cover materials. More particularly, the nanoparticles have been pre-dispersed or pre-blended into the prepolymers, prior to mixing a curative and said prepolymers. Optionally, the nanoparticles can also be pre-dispersed in a plasticizer used in the curing reaction. This pre-dispersion or pre-blending of nanoparticles into the prepolymer or the mixture of the raw materials results in a dispersion of nanoparticles throughout the coating obtained therefrom. The nanoparticles dispersed in the coating are selected from clay, carbon black, silica, silicon carbide, or metallic oxides, which could be in the form of platelets, particles or the like. The state of dispersing of the nanoparticles in the fine copolymer matrix of polyurethane is described as being an intercalated or exfoliated state.

WO 2005/124019 describes planar elements employed in papermaking machines constituted of synthetic composites incorporating nanoparticles in a polymeric resin matrix. The nanoparticles are used in these planar elements as additives or fillers in order to fill minute voids present in the resin matrix or to be uniformly dispersed in said resin matrix.

Further approaches for improving the mechanical properties of the material for paper making or processing equipments have been made by incorporating reinforcing agents such as carbon fibers, glass fibers and/or carbon/glass fiber hybrids into matrix polymers. Suitable methods for manufacturing such matrix materials can be casting, extrusion, ribbon flow, pultrusion processes, for example. Besides roll covers, reinforced polymers are used in doctoring, coating or creping blades.

In the light of the above, a general object of the present application is to overcome the above-mentioned problems of the common paper making and processing equipments, and to improve the mechanical and physical properties of roll cover materials useable in paper making and processing equipments. A further general object is to improve the heat conductivity of the matrix material, because a sufficient heat transfer is an essential property for example with highly loaded nip rolls to prevent cover failing in operation to conduct friction heat away from the contact surface thus saving the roll cover and, further, the runnability of the papermaking process.

These and further objects have been solved by the roll cover material according to claim 1, which comprises a polymer matrix consisting of at least one elastomeric material and at least one stiffening agent, wherein the stiffening agent used is a nanomodified polymer material.

According to the invention, said nanomodified polymer material is obtainable by hybridization or functionalization of pre-polymers with a nanostructure and polymerization of said pre-polymers, such as (meth)acrylate or epoxy monomers or oligomers. Optionally, said nanostructure essentially consists of carbon atoms. According to the present invention, said nanostructure comprises nanotubes or modified nanotubes. Alternatively, such nanstructured materials may optionally consist of hybridized nanostructures or functionalized nanomaterials.

In another aspect, the elastomeric material used in the roll cover material is a natural rubber or a synthetic rubber such as nitrile butadiene rubber (NBR), hydrogenated nitrile butadiene rubber (HNBR), chlorosulphonated polyethylene rubber (CSM) or ethylene propylene diene monomer (EPDM) rubber.

According to another aspect of the invention, said nanomodified polymer material and said elastomeric material can be bonded with each other in order to adjust the mechanical properties of the material. For example, they can be bonded by a cross-linking reaction or can be covalently bonded.

In a further aspect of the invention, the amount of the nanomodified polymer material used according to any one of the above aspects can be adjusted to 1 to 100 parts by weight, preferably 5 to 40 parts by weight, and more preferably 10 to 30 parts by weight, per 100 parts of said elastomeric material.

Moreover, the polymer matrix according to any one of the above-described aspects can optionally further comprise reinforcing agents and/or additives such as fillers and plasticizers. For example, when using a polymer matrix material as defined in the present invention, the common reinforcing agents or additives can, at least partly, be replaced by the nanostructured material contained in the stiffening agent used according to the present invention, in order to lower the costs of the material for the polymer matrix.

According to another aspect of the invention, the roll cover material according to any one of the above aspects can be used for the preparation of a cover layer for a roll such as a press roll, calendar roll, sizer and/or guide roll. Optionally, several cover layers may be provided on a roll, wherein it is preferable that at least the outermost cover layer comprises the roll cover material according to the present invention.

Another aspect of the present invention is a method of manufacturing an elastic roll cover comprising a roll cover material according to the present invention comprising a polymer matrix consisting of at least one elastomeric material and at least one nanomodified polymer material as a stiffening agent, and the method is characterized in that the polymer matrix is manufactured by the following steps:
a) blending at least one elastomeric material or elastomeric precursor with at least one nanomodified polymer material or pre-polymer of said nanomodified polymer material;
b) processing the blend into a roll cover; and
c) curing the blend.

Furthermore, the method can optionally comprise the step of incorporating reinforcing agents and/or additives into the blend.

In the method according to the present invention, the curing may be carried out by copolymerizing the elastomeric precursors with the pre-polymers of said nanomodified polymer material.

In a further aspect of the present invention, the blend may be processed in step b) of the method according to the present invention on a roll body by extrusion, casting or ribbon flow.

Further objects, effects and preferred embodiments of the present invention will be apparent from the appended claims as well as from the description of the following embodiments of the present invention and the appended Figure.

### Brief description of the Figure

The Figure is a graph showing the dependency of the modulus on the temperature in roll cover materials according to the present invention and comparative roll cover materials.

### Description of the preferred embodiments

The roll cover according to the present invention comprises a polymer matrix consisting of at least one elastomeric materialand at least one nanomodified polymer material as a stiffening agent.

The elastomeric material constituting the polymer matrix may be any material usually used as matrix material for a paper making or processing equipment and may be preferably be a natural rubber or a synthetic rubber such as nitrile butadiene rubber (NBR), hydrogenated nitrile butadiene rubber (HNBR), chlorosulphonated polyethylene rubber (CSM) or ethylene propylene diene monomer (EPDM) rubber. In addition, these matrix materials may comprise polymer materials copolymerizied with these rubbers components. Specific examples of these polymer materials are polymers capable of being processed in a casting, extrusion, pultrusion, or ribbon flow method. More specific examples are epoxy, polyurethane, vinyl ester urethane, and (meth)acrylate resins.

According to the present invention, a nanomodified polymer material is used as stiffening agent in order to appropriately adjust the mechanical and physical properties of the roll cover material. The stiffening agent may be used as an additive but it may alternatively be bonded with the elastomeric material in order to be covalently bonded to the polymer matrix of the roll cover material according to the present invention. If the elastomeric material is directly bonded with the stiffening agent, e.g. by cross-linking or copolymerization, the stiffening agent can be better retained within the polymer matrix during the use of this material in a roll cover layer.

The nanomodified polymer material component of the polymer matrix preferably comprises a carbon nanostructure essentially consisting of carbon atoms or a hybride material derivable from such a carbon nanostructure. The carbon atom structure of said material can preferably be a hexagonal network of carbon atoms as in graphite. As preferred examples for such nanostructured materials can be exemplified carbon nanotubes or other graphite-like nanostructures.

The carbon nanotubes can be imagined to be formed from a long and narrow graphite sheet by rolling the sheet into a tubular form. Thus, the local structure of graphite and carbon nanotubes is very similar, i.e. it consists of hexagonally bonded carbon atoms. If only one sheet is present in the carbon nanotube, it is called single-walled carbon nanotube. Another example of such a carbon nanotube is a multi-walled carbon nanotube, in which several graphite-like tubes are concentrically arranged. One or more of such layers can be stacked together.

The curvature in the carbon nanotubes makes them more reactive than the graphite. However, many modifications and variations of the hexagonal network of carbon atoms and graphite and carbon nanotubes are known to the skilled person. Therefore, this invention covers all graphite-like or graphite derived materials, if they are forming a nanostructure such as a carbon nanotube. Due to the lowering in the prices of carbon nanotubes, they are the most preferred starting materials for the nanomodified polymer materials used as stiffening agents in the polymer matrix of the roll cover material according to the present invention.

These nanotubes such as carbon nanotubes or nanotubes based on graphite are well-known in the prior art. Hybride materials such as modified or functionalized nanotubes and methods for producing such hybride materials are, for example, described in WO 2006/040398. These nanostructured materials have a high strength resistance and a good electrical and thermal conductivity.

In a preferred embodiment of the present invention, these hybridized nanostructures such as hybridized nanotubes obtainable by a hybridization reaction of carbon nanotubes can be used for the preparation of the nanomodified polymer material used as stiffening agent. For example, the carbon nanotubes can be functionalized whereas organic groups such as negatively or positively charged organic groups or uncharged organic groups are covalently bonded to the surface of the nanotube. These groups can be bonded to polymers in order to prepare the nanomodified polymer material.

In a further preferred embodiment, the hybridized nanostructures can be functionalized by monomeric units polymerizable with monomers in order to prepare the nanomodified polymer material by polymerization reaction. Alternatively, the monomeric units functionalized with nanostructures may be (co)polymerized with the elastomeric material used in the polymer matrix. If the polymer matrix is a (meth)acrylate matrix, for example, the hybridized nanostructured material preferably comprises a functionalized (meth)acrylic acid monomer or oligomer, functionalized with a nanostructure such as a carbon nanotube. This functionalization reaction is called hybridization.

Due to this hybridization of the nanostructured material in order to obtain (co)polymerizable monomeric units comprising nanostructures, the elastomeric material and the nanomodified polymer material of the polymer matrix can be bonded by a polymerization reaction. Thus, the nanostructured material can, for example, easily be covalently bonded to the polymer matrix, thus enhancing the strength of the bonding of the nanomodified polymer material as stiffening agent to the polymer matrix. When the paper making and processing equipment is a roll cover based on a polymer matrix containing rubber and a (meth)acrylate, the nanomodified polymer material is preferably be based on a (meth)acrylate resin. Thus, the nanomodified polymer material can, for example, be prepared from a carbon nanotube-modified (meth)acrylate resin precursor such as a (meth)acrylate monomer or oligomer.

However, the stiffening agent is not limited to (meth)acrylate based polymers. Thus, in an alternative embodiment of the present invention an epoxy-based polymer can be used as the nanomodified polymer material. Analogous to the above-described preferred embodiment, this nanomodified polymer material can be prepared either by functionalizing an epoxy-based polymer with nanostructures or by polymerization of hybridizied nanostructures having polymerizable monomer or oligomer units. More preferable, the polymerization reaction can be a copolymerization of hybridized pre-polymers with elastomeric precursors. Thus, a polymer matrix can be obtained in which the stiffening agent is covalently bonded to the elastomeric material.

Moreover, the polymer matrix constituting the paper making or processing equipment according to another embodiment of the present invention can optionally comprise reinforcing agents and/or additives such as fillers and plasticizers. Reinforcing agents and additives usually used in the matrix materials of roll covers for being used in paper making or processing equipments are well known to the skilled person.

Exemplified reinforcing agents and additives such as fillers which can be used together with the specific nanomodified stiffening agent used according to the present invention can be selected from the group consisting of glass fibers, carbon fibers, and hybrids of these fibers. Examples of other fillers are particular mineral fillers, synthetic fibers or particulate fillers known to persons skilled in the art. The amount of the reinforcing agents and the additives may be lowered compared with the amounts commonly used because they are partly replaced by the nanomodified stiffening agent used according to the present invention.

Carbon fibers have good heat conductivity and, thus, the lowering of the content of carbon fibers in highly loaded roll covers leads to a lowering of the heat conductivity of the polymer matrix material. Therefore, when using a low content of carbon fibers in the polymer matrix, the use of nanocarbon tubes in the nanomodified polymer material is preferred, because of the good heat conductivity of said nanotubes. The good heat conductivity of the carbon nanotubes is based on the nanostructure of the carbon nanotubes in the lengthwise direction. Thus, a unitary heat conductive layer can be formed by replacing carbon fibers or glass fibers with carbon nanotubes or a mixture of carbon nanotubes and other commonly used fillers, while the polymer matrix has a sufficient strength.

This is particularly useful when the nanomodified polymer material is on a (meth)acrylic basis, because (meth)acrylate (co)polymers have itself a poor heat conductivity. Thus, the above described increase of the heat conductivity of the polymer matrix due to the incorporation of highly heat conductive nanostructured materials such as carbon nanotubes is remarkable. Since a sufficient heat transfer is essential for preventing a cover failing in service, especially during a long-term use or a repeatedly use in a paper making or processing application, the use of the nanmodified polymer materials as stiffening agent in the roll cover material of the present invention makes it possible to overcome the problems of the commonly used elastomeric resin materials.

If this roll cover material is used for preparing a roll cover layer and the roll cover is in a multi-layer form it is at least the outermost layer where the roll cover material of the present invention is used. In order to conduct away the heat generated from the surface it is preferred to use the roll cover material of the present invention as a constituent in other layers, too, most preferably in all layers so that the bottom layer conducts the heat to the metal roll body.

Especially, while the roll cover material according to the present invention has a good elasticity, such as in a roll cover, the material generally has a low internal heat built-up. Therefore, when using the bonded nanostructured materials as a component of the polymer matrix for roll covers of rolls such as a press roll, calendar roll, sizer, and guide roll, the heat transfer properties of the polymer matrix material can remarkably be improved.

Not only the heat conductivity of the polymer matrix material, but also the toughness strength properties and the abrasion resistance can be improved by the mechanical properties of the nanomodified polymer material comprised in the polymer matrix of a roll cover material according to the present invention as stiffening agent.

The content of the nanomodified polymer material in the polymer matrix, especially when a carbon nanotube-modified (meth)acrylate resin is used, is generally about 1 to 100 parts by weight, preferably 5 to 40 parts by weight, and more preferably 10 to 30 parts by weight, per 100 parts of said elastomeric material. With lower amounts the stiffening effect is undesirable low. With higher amounts the processing characteristic is negatively affected.

The use of the nanomodified polymer material as stiffening agent such as the above described hybridized carbon nanotubes covalently bonded to the polymer remarkably increases the modulus of the polymer matrix compared to the use of a non-modified resin. Furthermore, the tear strength according to the ASTM D624 is remarkably improved compared to the case of a non-modified resin. Therefore, the use of a nanomodified polymer material as a stiffening agent in a polymer matrix in a paper making or processing equipment such as a roll cover layer leads to beneficial effects with regard to the heat conductivity, the toughness strength properties and the abrasion resistance.

The beneficial effects of the present invention are, however, not only based on the mechanical and physical properties of the nanomodified polymer materials, but also being influenced by the bonding of the elastomeric material and the nanomodified polymer material, e.g., by cross-linking or covalently bonding. Therefore, according to one preferred embodiment of the present invention, the nanomodified polymer material is not only admixed or incorporated into the composite material by the force of adhesion of the stiffening agent, but is strongly bonded to the matrix polymer material. Therefore, the polymer matrix as defined in the present invention can have, among others, the following advantages, namely a higher modulus, a higher strength, a higher strain at break, a higher T_{g}, an enhanced fracture toughness, a better chemical resistance, or an adjustable performance. This is due to the more dense molecular structure of the nanomodified polymer material and the bonding or cross-linking in the polymer matrix, causing a further reinforcing of the composite material of the polymer matrix. Therefore, the pull-outs of the stiffening agent from the polymer matrix during the manufacturing of the paper making or processing equipment or the application of this equipment in a paper making or processing procedure can be ensured. Thus, the paper-making or processing equipment such as the roll cover obtained from a roll cover material according to the present invention has a better performance due to a stronger structure and the covalent bonds optionally formed between the nanomodified polymer material and the elastomeric material.

The above-described polymer matrix material can suitably be used for preparing an elastic roll cover. Therefore, the present invention also relates to a method of manufacturing an elastic roll cover comprising a roll cover material according to one of the above-described aspects. The roll cover material comprises a polymer matrix consisting of at least one elastomeric material and at least one nanomodified polymer material. In order to achieve the above physical and mechanical characteristic of the cover layer, the polymer matrix is manufactured by a) blending at least one elastomeric material or elastomeric precursor with at least one nanomodified polymer material or pre-polymer of said nanomodified polymer material; b) processing the blend into a roll cover; and c) curing the blend. The roll cover obtained can be directly bonded to a roll substrate or can be slipped over a roll substrate after deformation.

In a preferred embodiment monomers constituting said elastomeric material and nanomodified monomers, oligomers or precursors, like carbon nanotube-modified (meth)acrylic, epoxy, polyurethane, vinyl ester urethane monomers, oligomers or precursors are blended, processed into a roll cover and then (co)polymerized for curing. Thus, a roll cover having beneficial physical and mechanical characteristics such as a toughness strength, abrasion resistance and good heat conductivity in a well-balanced manner can be obtained from the above-described process.

### Examples

In the following the present invention is further described on the basis of Examples. The Examples are intended for illustration of the present invention only, but are not intended to limit the invention thereto.

One example is shown in the Figure, where the dependence of the single cantilever bending on the temperature in modified resin matrices (identified as NLX samples) and in non-modified resin matrices (identified as SR297F samples) is shown. The test gives information of deformation of a material under mechanical and thermal load.

In the table below, the improved tear strength (measured according to the ASTM D624) of said modified resins is compared to that of non-modified resins. Tear strength gives a good indication of applicability of a material to be used as a component in a paper machine. It tells about material's capability to resist local loads without tearing.

The unit "phr" means "parts by weight per hundred parts rubber".

### Comparative Examples 1 to 3

Three samples were made of a blend of NBR-rubber and 1,3-butyleneglycol dimethacrylate resin SR297, product of Sartomer Corporation, and a peroxide curing agent. Methacrylate resin was used in amounts of 10, 20, and 30 parts per hundred parts of rubber (phr) (Comparative Examples 1, 2, and 3 respectively). After curing the tear strength according to the ASTM testing method D624 and the single cantilever bending (E-modulus versus temperature in 0.20 % strain and 10 Hz frequency in a dynamic mechanical analysator, 3-point bending mode) of each of the samples were measured. P&J hardness of the samples were in the range of 15 to 25.

### Examples 1 to 3

Three samples were made using the same amounts and constituents as in comparative examples except that instead of SR297 methacrylate resin NLX resin was used. NLX is received from Amroy Oy and it is a methacrylate resin which has been modified with carbon nanotubes by mixing carbon nanotubes with 1,3-butylene glycol methacrylate resin in an amount of approximately less than 10:90. Amounts of resin used were 10, 20, 30 phr, respectively, as indicated in the Table 1. The same measurements as with Comparative Examples were carried out. The P&J hardness of the samples were in the range of 15 to 25, such the hardness of a comparative example and an example with identical phr amounts had the same hardness.

As seen in the Table 1 tear strength of the samples of the invention comprising a composition containing a nanotube modified resin is clearly better to those of the comparative examples. With these specific sample compositions, it seems further that using NLX in amounts of 10 to 20 phr gives better results than NLX amounts of 30 phr.

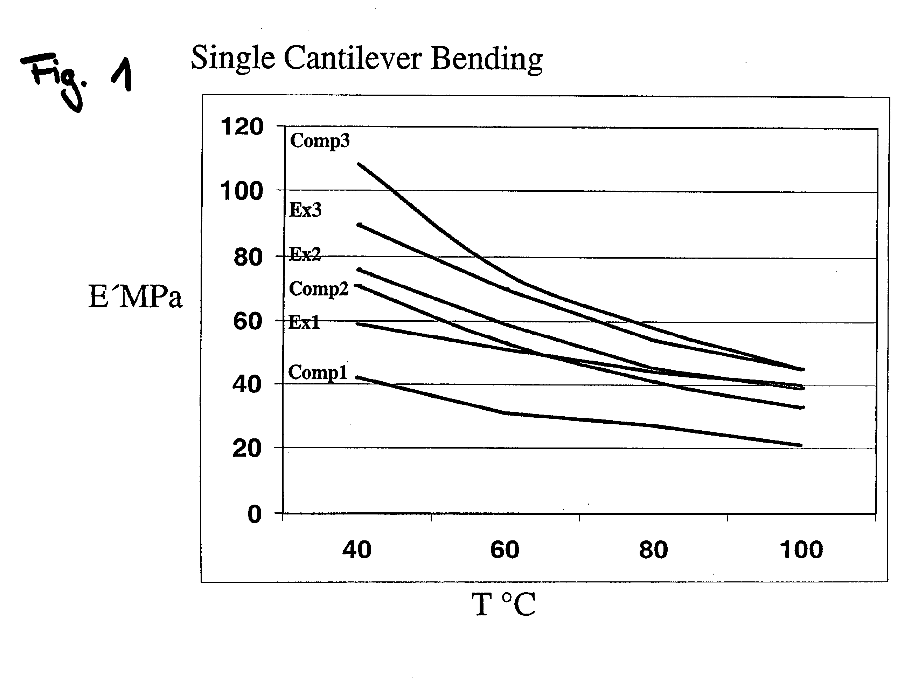

Figure 1 is a graph of E-modulus of the samples as a function of the temperature. As can be seen, in the temperature range higher than 60°C, which is the typical range in papermaking processes modulus of all samples according to the present invention, i.e. examples 1 to 3, is grater than that of the comparative examples 1 and 2 and approximately the same as or at least pretty close to the modulus value of comparative example 3. The Example 3 gives the best values of the samples of the invention. It is concluded that by using the nanomodified stiffening agent according to the present invention in the matrix material of a roll cover the tear strength properties are improved and acceptable deformation under mechanical and thermal load is achieved, even with lower methacrylate incorporation than in the comparative samples.

**Table 1:**

| **Example** | **Components** | **Tear strength (ASTM D624, die C) [kN/m]** |
|---|---|---|
| Ex.1 | NBR-rubber, 10phr NLX | 49.30 |
| Ex.2 | NBR-rubber, 20phr NLX | 45.00 |
| Ex.3 | NBR-rubber, 30phr NLX | 44.30 |
| Comp.Ex.1 | NBR-rubber, 10phr SR297 | 40.60 |
| Comp.Ex.2 | NBR-rubber, 20phr SR297 | 34.38 |
| Comp.Ex.3 | NBR-rubber, 30phr SR297 | 41.50 |

## Claims

1. Roll cover material comprising a polymer matrix consisting of at least one elastomeric material and at least one stiffening agent, wherein the stiffening agent used is a nanomodified polymer material comprising nanotubes or modified nanotubes.

2. Roll cover material according to claim 1, wherein said nanomodified polymer material is obtainable by hybridization or functionalization of pre-polymers with a nanostructure and polymerization of said pre-polymers.

3. Roll cover material according to claim 2, wherein said nanostructure essentially consists of carbon atoms.

4. Roll cover material according to claim 2, wherein the pre-polymers are (meth)acrylate or epoxy monomers or oligomers.

5. Roll cover material according to any one of claims 1 to 4, wherein the elastomeric material is a natural rubber or synthetic rubber.

6. Roll cover material according to any one of claims 1 to 5, wherein the nanomodified polymer material is bonded with the elastomeric material.

7. Roll cover material according to claim 6, wherein the nanomodified polymer material is bonded to the elastomeric material either covalently or by a cross-linking reaction.

8. Roll cover material according to any one of claims 1 to 7, wherein the amount of the nanomodified polymer material is 1 to 100 parts by weight per 100 parts of said elastomeric material.

9. Roll cover material according to any one of the claims 1 to 8, wherein the polymer matrix further comprises reinforcing agents and/or additives.

10. Use of the roll cover material according to any one of claims 1 to 9 for preparing the outermost cover layer of a roll.

11. Method of manufacturing an elastic roll cover comprising a roll cover material according to any one of claims 1 to 9, comprising a polymer matrix consisting of at least one elastomeric material and at least one nanomodified polymer material as a stiffening agent, **characterized in that**
the polymer matrix is manufactured by the following steps:
a) blending at least one elastomeric material or elastomeric precursor with at least one nanomodified polymer material or pre-polymer of said nanomodified polymer material;
b) processing the blend into a roll cover; and
c) curing the blend.

12. Method according to claims 11, wherein reinforcing agents and/or additives are incorporated into the blend.

13. Method according to claim 11 or 12, wherein the curing is obtained by copolymerizing the elastomeric precursor with the pre-polymers of said nanomodified polymer material.

14. Method according to any one of claims 11 to 13, wherein the blend is processed in step b) on a roll body by extrusion, casting or ribbon flow.

## Patentansprüche

1. Walzenbezugsmaterial, umfassend eine aus zumindest einem elastomeren Material und zumindest einem Versteifungsmittel bestehende Polymermatrix, wobei das verwendete Versteifungsmittel ein Nanoröhren oder modifizierte Nanoröhren umfassendes nanomodifiziertes Polymermaterial ist.

2. Walzenbezugsmaterial nach Anspruch 1, wobei das nanomodifizierte Polymermaterial durch Hybridisierung oder Funktionalisierung von Vorpolymeren mit einer Nanostruktur und Polymerisation der Vorpolymere erhältlich ist.

3. Walzenbezugsmaterial nach Anspruch 2, wobei die Nanostruktur im Wesentlichen aus Kohlenstoffatomen besteht.

4. Walzenüberzugsmaterial nach Anspruch 2, wobei die Vorpolymere (Meth)Acrylat oder Epoxymonomere oder Oligomere sind.

5. Walzenbezugsmaterial nach einem der Ansprüche 1 bis 4, wobei das elastomere Material ein natürlicher Kautschuk oder ein synthetischer Kautschuk ist.

6. Walzenbezugsmaterial nach einem der Ansprüche 1 bis 5, wobei das nanomodifizierte Polymermaterial mit dem elastomeren Material gebunden ist.

7. Walzenbezugsmaterial nach Anspruch 6, wobei das nanomodifizierte Polymermaterial entweder kovalent oder durch eine Vernetzungsreaktion an das elastomere Material gebunden ist.

8. Walzenbezugsmaterial nach einem der Ansprüche 1 bis 7, wobei die Menge des nanomodifizierten Polymermaterials 1 bis 100 Gewichtsteile pro 100 Gewichtsteile des elastomeren Materials beträgt.

9. Walzenbezugsmaterial nach einem der Ansprüche 1 bis 8, wobei die Polymermatrix ferner Verstärkungsmittel und/oder Additive umfasst.

10. Verwendung des Walzenbezugsmaterials nach einem der Ansprüche 1 bis 9 zum Herstellen der äußersten Bezugsschicht einer Walze.

11. Verfahren zum Herstellen eines elastischen Walzenbezugs, umfassend ein Walzenbezugsmaterial nach einem der Ansprüche 1 bis 9, umfassend eine aus zumindest einem elastomeren Material und zumindest einem nanomodifizierten Polymermaterial als ein Versteifungsmittel bestehende Polymermatrix, **dadurch gekennzeichnet, dass**
die Polymermatrix durch die folgenden Schritte hergestellt wird:
a) Vermengen zumindest eines elastomeren Materials oder einer elastomeren Vorstufe mit zumindest einem nanomodifizierten Polymermaterial oder Vorpolymer des nanomodifizierten Polymermaterials;
b) Verarbeiten der Vermengung in einen Walzenbezug; und
c) Härten der Vermengung.

12. Verfahren nach Anspruch 11, wobei Verstärkungsmittel und/oder Additive in die Vermengung einbezogen werden.

13. Verfahren nach Anspruch 11 oder 12, wobei das Härten durch Copolymerisieren der elastomeren Vorstufe mit den Vorpolymeren des nanomodifizierten Polymermaterials erhalten wird.

14. Verfahren nach einem der Ansprüche 11 bis 13, wobei die Vermengung in dem Schritt b) durch Extrusion, Gießen oder Bandströmung auf einen Walzenkörper verarbeitet wird.

## Revendications

1. Matériau de revêtement de cylindre comprenant une matrice polymère consistant en au moins un matériau élastomérique et au moins un agent solidifiant, dans lequel l'agent solidifiant utilisé est un matériau polymère nanomodifié comprenant des nanotubes ou des nanotubes modifiés.

2. Matériau de revêtement de cylindre selon la revendication 1, dans lequel ledit matériau polymère nanomodifié peut être obtenu par hybridation ou fonctionnalisation de pré-polymères avec une nanostructure et polymérisation desdits pré-polymères.

3. Matériau de revêtement de cylindre selon la revendication 2, dans lequel ladite nanostructure consiste essentiellement en atomes de carbone.

4. Matériau de revêtement de cylindre selon la revendication 2, dans lequel les pré-polymères sont des monomères ou des oligomères de (méth)acrylate ou d'époxy.

5. Matériau de revêtement de cylindre selon l'une quelconque des revendications 1 à 4, dans lequel le matériau élastomérique est un caoutchouc naturel ou un caoutchouc synthétique.

6. Matériau de revêtement de cylindre selon l'une quelconque des revendications 1 à 5, dans lequel le matériau polymère nanomodifié est lié avec le matériau élastomérique.

7. Matériau de revêtement de cylindre selon la revendication 6, dans lequel le matériau polymère nanomodifié est lié au matériau élastomérique soit de manière covalente, soit par une réaction de réticulation.

8. Matériau de revêtement de cylindre selon l'une quelconque des revendications 1 à 7, dans lequel la quantité du matériau polymère nanomodifié est 1 à 100 parties en poids pour 100 parties dudit matériau élastomérique.

9. Matériau de revêtement de cylindre selon l'une quelconque des revendications 1 à 8, dans lequel la matrice polymère comprend en outre des agents de renfort et/ou des additifs.

10. Utilisation du matériau de revêtement de cylindre selon l'une quelconque des revendications 1 à 9 pour préparer la couche de revêtement la plus extérieure d'un cylindre.

11. Procédé de fabrication d'un revêtement de cylindre élastique comprenant un matériau de revêtement de cylindre selon l'une quelconque des revendications 1 à 9, comprenant une matrice polymère consistant en au moins un matériau élastomérique et au moins un matériau polymère nanomodifié comme un agent solidifiant,
**caractérisé en ce que**
la matrice polymère est fabriquée par les étapes suivantes :
a) mélange d'au moins un matériau élastomérique ou d'un précurseur élastomérique avec au moins un matériau polymère nanomodifié ou un pré-polymère dudit matériau polymère nanomodifié ;
b) traitement du mélange en un revêtement de cylindre ; et
c) durcissement du mélange.

12. Procédé selon la revendication 11, dans lequel des agents de renfort et/ou des additifs sont incorporés dans le mélange.

13. Procédé selon la revendication 11 ou 12, dans lequel le durcissement est obtenu par copolymérisation du précurseur élastomérique avec les pré-polymères dudit matériau polymère nanomodifié.

14. Procédé selon l'une quelconque des revendications 11 à 13, dans lequel le mélange est traité à l'étape b) sur un corps de cylindre par extrusion, coulée ou flux en ruban.
